(19) Europäisches Patentamt / European Patent Office / Office européen des brevets

(11) **EP 2 813 374 A1**

(12) **DEMANDE DE BREVET EUROPEEN**

(43) Date de publication:
17.12.2014 Bulletin 2014/51

(21) Numéro de dépôt: **14171575.5**

(22) Date de dépôt: **06.06.2014**

(51) Int Cl.:
*B43L 9/08* (2006.01)      *B43L 13/00* (2006.01)
*G01B 3/16* (2006.01)      *G01C 15/00* (2006.01)
*B43L 13/10* (2006.01)      *G01B 5/20* (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **10.06.2013 CH 10862013**
**10.06.2013 FR 1355306**

(71) Demandeur: **Levy, Robert**
**1226 Thonex (CH)**

(72) Inventeur: **Levy, Robert**
**1226 Thonex (CH)**

(74) Mandataire: **Moinas & Savoye SA**
**42, rue Plantamour**
**1201 Genève (CH)**

(54) **Instrument de mesure et/ou de tracé et/ou de visée**

(57) Instrument de mesure et/ou de tracé et/ou de visée : comprenant sur une même ligne un premier repère, un deuxième repère, un troisième repère, un quatrième repère et un cinquième repère reliés entre eux par un élément de liaison autorisant un déplacement relatif des repères selon la formule suivante : avec : - d1 la distance entre les premier et quatrième repères ; - d2 la distance entre les deuxième et quatrième repères ; - d3 la distance entre les troisième et quatrième repères ; - d4 la distance entre les cinquième et quatrième repères ; - Φ un nombre constant, notamment Φ est égal ou sensiblement égal à 1.5, ou 1.6 ou 1.62 ou 1.618 ou/2, et/ou $(1+\sqrt{5})/2$

FIGURE 1A

FIGURE 1B

**Description**

La présente invention se rapporte au domaine des instruments de mesure et/ou de tracé et/ou de visée ainsi qu'à l'utilisation d'un tel instrument.

De tels instruments de mesure et/ou de tracé et/ou de visée sont généralement mis en oeuvre pour la réalisation de plans architecturaux ou d'oeuvres d'art telles que des peintures ou encore des sculptures.

Dans le cadre de telles réalisations, il est souvent nécessaire de quantifier et mesurer les objets, personnes ou encore environnements devant être reproduits afin notamment de pouvoir les représenter dans des proportions réalistes.

Pour ce faire, en connait dans l'art antérieur des instruments de mesure mettant en oeuvre le principe dit du « Nombre d'Or ».

Cependant, de tels instruments sont souvent très encombrants et sont de plus d'une utilisation complexe. En effet, ils requièrent systématiquement que soient réalisés des calculs fastidieux et longs qui ne sont pas adaptés à une utilisation régulièrement, de ces instruments, dans le cadre de telles réalisations.

La présente invention vise à résoudre ces problèmes résultant des inconvénients de l'état de l'art.

Avantageusement, l'instrument de mesure et/ou de tracé et/ou de visée de la présente invention est peu encombrant et peut être utilisé facilement.

Dans ce dessein, l'invention concerne un instrument de mesure et/ou de tracé et/ou de visée comprenant un premier repère, un deuxième repère, un troisième repère et un quatrième repère reliés entre eux par un élément de liaison autorisant un déplacement relatif des repères selon la formule suivante :

$$\frac{d1}{d2} = \frac{d1}{d6} = \Phi$$

avec :

- d1 la distance entre les premier et quatrième repères ;
- d2 la distance entre les deuxième et quatrième repères ;
- d6 la distance entre les premier et troisième repères ; et
- Φ un nombre constant, notamment Φ est égal ou sensiblement égal à 1.5, ou 1.6 ou 1.62 ou 1.618 ou (1+√5)/2,

et/ou

comprenant un premier repère, un deuxième repère, un troisième repère, un quatrième repère et un cinquième repère reliés entre eux par un élément de liaison autorisant un déplacement relatif des repères selon la formule

suivante :

$$\frac{d1}{d2} = \frac{d3}{d4} = \Phi$$

avec :

- d1 la distance entre les premier et quatrième repères ;
- d2 la distance entre les deuxième et quatrième repères ;
- d3 la distance entre les troisième et quatrième repères ;
- d4 la distance entre les cinquième et quatrième repères ;
- Φ un nombre constant, notamment Φ est égal ou sensiblement égal à 1.5, ou 1.6 ou 1.62 ou 1.618 ou (1+√5)/2,

et/ou

comprenant un premier repère, un deuxième repère, un troisième repère, un quatrième repère, un cinquième repère et un sixième repère reliés entre eux par un élément de liaison autorisant un déplacement relatif des repères selon la formule suivante :

$$\frac{d1}{d2} = \frac{d3}{d4} = \frac{d4}{d5} = \Phi$$

avec :

- d1 la distance entre les premier et quatrième repères ;
- d2 la distance entre les deuxième et quatrième repères ;
- d3 la distance entre les troisième et quatrième repères ;
- d4 la distance entre les cinquième et quatrième repères ;
- d5 la distance entre les sixième et quatrième repères ; et
- Φ un nombre constant, notamment Φ est égal ou sensiblement égal à 1.5, ou 1.6 ou 1.62 ou 1.618 ou (1 +√5)/2.

Selon des modes de réalisation particuliers :

- l'élément de liaison comprend en particulier quatre parallélogrammes (T1, T2, T3, T4) déformables, notamment des parallélogrammes dont le rapport de longueurs de deux côtés contigus, est égal à

$$\frac{a}{b} = \Phi \; ;$$

- l'élément de liaison comprend des branches susceptibles de former en leur extrémité libre un repère visant à définir une mesure, lesdites branches étant reliées entre elles par des éléments d'articulation de sorte à pourvoir évoluer entre une position dépliée dans laquelle les repères sont éloignés les uns des autres et une position repliée dans laquelle ces repères sont sensiblement accolés les uns aux autres ;
- l'élément de liaison comporte des sous branches d'une longueur inférieure à celle des branches ;
- les branches forment quatre paires de branches qui sont reliées entre elles à une de leurs extrémités par un élément d'articulation ;
- une branche de chaque paire de branches est reliée à deux branches de paires différentes par des éléments d'articulation ;
- les sous branches sont reliées chacune par des éléments d'articulation à deux branches de paires différentes comportant moins de trois éléments d'articulation ;
- l'extrémité libre des sous branches forme un repère visant à définir une mesure ;
- chaque repère comporte un logement susceptible de recevoir un élément apte à réaliser un pointage et/ou un marquage de mesure ;
- les repères sont compris sur une même ligne ;
- l'élément de liaison comporte un élément de verrouillage dudit instrument dans une position donnée ;
- les extrémités d'une branche ou d'une sous branche comprennent des éléments d'articulation ;
- les sous branches sont droites et de même longueur ;
- les branches sont droites, et
- les sous branches sont droites et de même longueur.

L'invention concerne également une utilisation d'un tel instrument de mesure et/ou de tracé et/ou de visée, comprenant les étapes suivantes :

- positionnement et dépliage dudit instrument dans une position donnée ;
- maintien dudit instrument dans la position donnée, et
- marquage de la mesure réalisée.

D'autres avantages et caractéristiques de l'invention apparaîtront mieux à la lecture de la description d'un mode de réalisation préféré qui va suivre, en référence aux figures ci-dessous, réalisé à titre d'exemple indicatif et non limitatif :

- la figure 1A représente un instrument de mesure et/ou de tracé et/ou de visée dans une position dépliée selon ce mode de réalisation de l'invention ;
- la figure 1B est une vue à plus grande échelle d'un repère de l'instrument de mesure et/ou de tracé et/ou de visée illustré à la figure 1A ;
- la figure 2 représente l'instrument de mesure et/ou de tracé et/ou de visée qui est dans une position dépliée particulière selon ce mode de réalisation de l'invention ;
- la figure 3 est une vue de dessus de la face avant de l'instrument selon ce mode de réalisation de l'invention ;
- la figure 4 est une vue de dessus de la face arrière de l'instrument selon ce mode de réalisation de l'invention, et
- la figure 5 illustre un exemple de tracé régulateur obtenu par l'utilisation de l'instrument selon ce mode de réalisation.

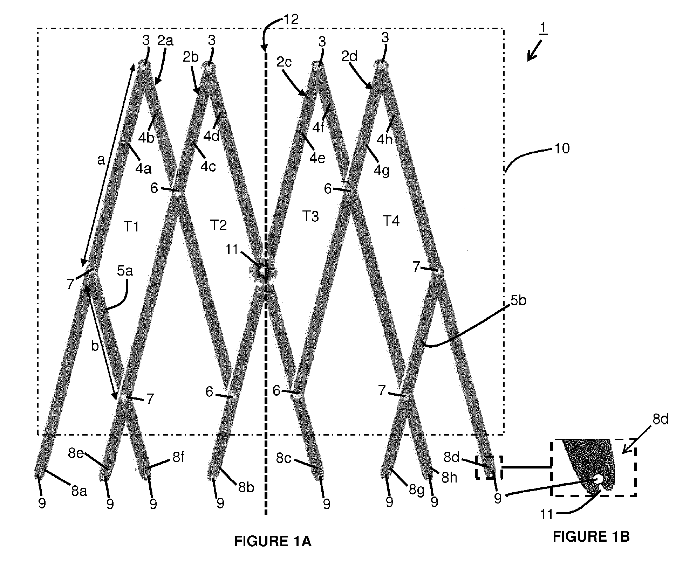

L'instrument 1 de mesure et/ou de tracé et/ou de visée illustré aux figures 1A à 4 permet, en plus d'être d'utilisation simple, de réaliser un tracé régulateur 24 basé sur le Nombre d'Or afin de placer dans le cadre de la réalisation de plans architecturaux ou d'oeuvres d'art comme la peinture ou la sculpture, le ou les centres d'intérêt de l'objet, de cette réalisation, devant être représenté.

Cet instrument 1 comprend des repères 8a, 8b, 8c, 8d, 8e, 8f, 8g, 8h reliés entre eux par un élément de liaison susceptible de faire varier proportionnellement les distances d1, d2, d3, d4,d5 et d6 compris entre ces différents repères.

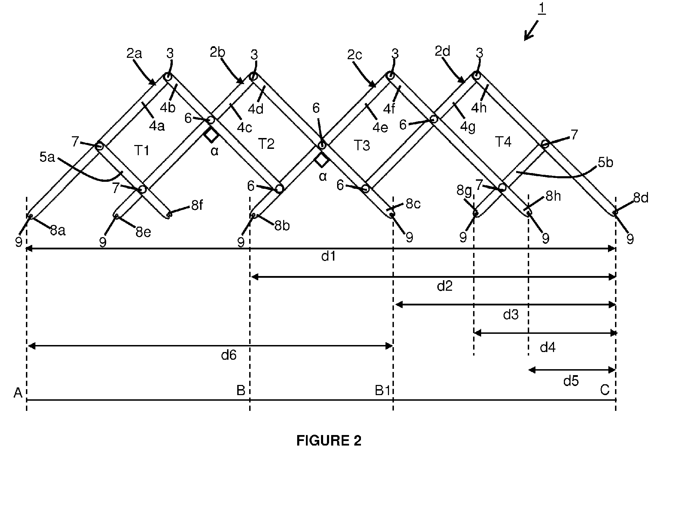

Ainsi qu'il est illustré à la figure 2, ces distances correspondent pour :

- d1 à celle qui est comprise entre les repères extérieurs 8a et 8d ;
- d2 à celle qui est comprise entre le repère intérieur 8b et le repère extérieur 8d ;
- d3 à celle qui est comprise entre le repère intérieur 8c et le repère extérieur 8d ou encore entre le repère intérieur 8b et le repère extérieur 8a;
- d4 à celle qui est comprise entre le repère intermédiaire 8g et le repère extérieur 8d ou encore entre le repère intermédiaire 8f et le repère extérieur 8a ;
- d5 à celle qui est comprise entre le repère intermédiaire 8h et le repère extérieur 8d ou encore entre le repère intermédiaire 8e et le repère extérieur 8a, et
- d6 à celle qui est comprise entre le repère extérieur 8a et le repère intérieur 8c.

Ainsi, lorsque l'instrument 1 comprend un premier repère 8a, un deuxième repère 8b, un troisième repère 8c et un quatrième repère 8d reliés entre eux par un élément de liaison 10, ce dernier autorise un déplacement relatif de ces repères selon la formule suivante :

$$\frac{d1}{d2} = \frac{d1}{d6} = \Phi$$

Lorsque, cet instrument 1 comprend un premier repère 8a, un deuxième repère 8b, un troisième repère 8c, un quatrième repère 8d et un cinquième repère 8g reliés entre eux par un élément de liaison 10, ce dernier autorise un déplacement relatif de ces repères selon la formule suivante :

$$\frac{d1}{d2} = \frac{d3}{d4} = \Phi$$

Et lorsque, cet instrument 1 comprend un premier repère 8a, un deuxième repère 8b, un troisième repère 8c, un quatrième repère 8d, un cinquième repère 8g et un sixième repère 8h reliés entre eux par un élément de liaison 10, ce dernier autorise un déplacement relatif de ces repères selon la formule suivante :

$$\frac{d1}{d2} = \frac{d3}{d4} = \frac{d4}{d5} = \Phi$$

$\Phi$ est un nombre constant qui est notamment égal ou sensiblement égal à 1.5, ou 1.6 ou 1.62 ou 1.618 ou (1 +√5)/2.

L'élément de liaison de cet instrument 1 peut comprendre quatre parallélogrammes T1, T2, T3, T4 déformables. Pour chacun de ces parallélogrammes T1, T2, T3, T4 le rapport de la longueur de leur côté a de plus grande dimension avec le côté b de plus petite dimension, contigu au côté a, est égale à la valeur de $\Phi$, soit : $\dfrac{a}{b} = \Phi$

On notera que lorsque l'instrument 1 comporte quatre repères 8a, 8b, 8c, 8d reliés entre eux par l'élément de liaison 10 qui est susceptible de faire varier les distances d1, d2 et d3 compris entre ces repères, la position des lignes d'Or primaire et secondaire est déterminée à partir des repères 8b et 8c.

Cet élément de liaison 10 illustré aux figures 1A à 4 comprend :

-   des branches 4a, 4b, 4c, 4d, 4e, 4f, 4g, 4h ;
-   des éléments d'articulation 3, 6, 7 ;
-   des sous branches 5a, 5b ;
-   un élément de verrouillage 11 ;

Les branches 4a, 4b, 4c, 4d, 4e, 4f, 4g, 4h peuvent être réalisées en matière plastique, en bois ou encore en un métal ou alliage tel que l'aluminium ou encore l'acier inoxydable pouvant être anodisé. Elles peuvent être droites ou courbées. Parmi ces branches 4a à 4h, les branches 4a, 4c, 4d, 4e, 4f, 4h ont une longueur différente de celle des branches 4b et 4g.
Ces branches 4a à 4h ont par exemple les dimensions suivantes :

-   largeur d'environ 7,5 à 8,5 mm ;
-   épaisseur d'environ 1,5 à 2,3 mm, et
-   longueur pour :

    •   les branches 4a, 4c, 4d, 4e, 4f, 4h, environ 180 à 185 mm ;
    •   les branches 4b, 4g, environ 149 à 152 mm.

Ces branches 4a, 4b, 4c, 4d, 4e, 4f, 4g, 4h comprennent deux extrémités, dont une comporte un élément d'articulation 3 permettant de la lier à une autre branche. L'autre extrémité dite « libre », du fait notamment qu'elle ne soit pas liée à une autre branche par un élément d'articulation 3, peut former un repère 8a, 8b, 8c, 8d, 8e, 8h visant à définir une mesure ou comporter alternativement un élément d'articulation 6.
On notera que ces éléments d'articulation 3 agissent comme des pivots en contribuant à réduire l'encombrement de l'instrument 1 lorsqu'il est replié et à offrir lorsqu'il est déplié un grand angle d'ouverture total.
Aux figures 1 et 2 par exemple, l'instrument 1 comporte huit branches 4a, 4b, 4c, 4d, 4e, 4f, 4g, 4h dont six comprennent des repères 8a, 8b, 8c, 8d, 8e, 8f, 8g, 8h à leur extrémité dite libre - les branches 4a, 4c, 4d, 4e, 4f et 4h - et deux comportent à cette extrémité un élément d'articulation 6 - les branches 4b et 4g -.
Dans une variante, l'instrument 1 peut comprendre des branches 4a, 4b, 4c, 4d, 4e, 4f, 4g, 4h dont l'extrémité dite libre comporte que des repères.
Ainsi que nous l'avons vu précédemment, l'instrument 1 comprend également des sous branches 5a et 5b. Ces sous branches 5a et 5b forment en leur extrémité libre un repère 8f, 8g.
Elles peuvent être droites ou courbées et de même longueur. Elles peuvent être réalisées en une matière rigide telle que le plastique, bois ou encore un métal ou alliage tel que l'aluminium ou l'acier inoxydable pouvant être anodisé.
Elles ont de manière générale les mêmes dimensions. Ces dimensions correspondent par exemple :

-   longueur d'environ 92 à 96 mm ;
-   largeur d'environ 7,5 à 8,5 mm, et
-   épaisseur d'environ 1,5 à 2,3 mm.

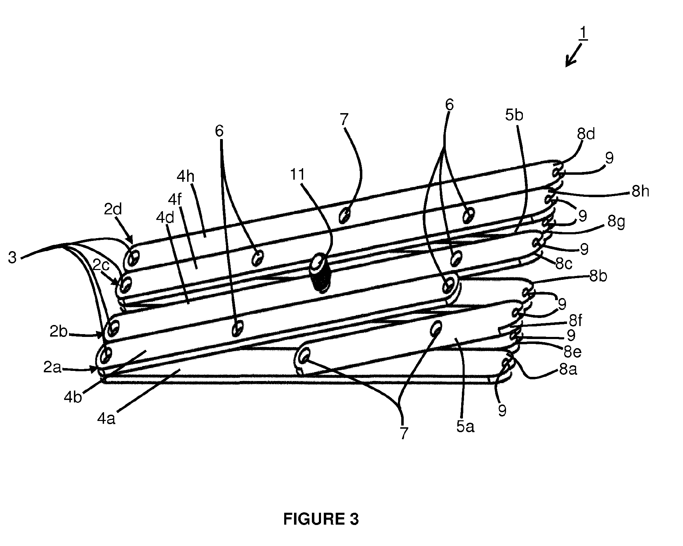

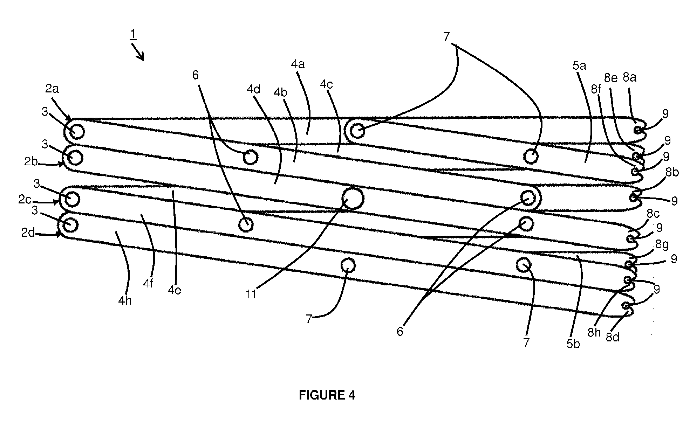

On remarquera que ces sous branches 5a, 5b ont une longueur qui est inférieure à celle des branches 4a à 4h de l'instrument 1 de mesure et/ou de tracé et/ou de visée.
Dans cet instrument 1, les branches 4a à 4h et les sous branches 5a, 5b sont reliées entre elles par des éléments d'articulation 3, 6 et 7 de sorte à pourvoir ainsi évoluer entre une position dépliée, ainsi qu'il est illustré aux figures 1 et 2, vers une position repliée telle qu'il est représenté aux figures 3 et 4, et inversement.

Ces éléments d'articulations 6, 3, 7 ont pour fonction de relier les branches 4a à 4b et les sous branches 5a, 5b entre elles de manière à ce qu'elles puissent être mobiles en des points de liaison que constituent ces éléments d'articulation 3, 6 et 7. Un tel élément d'articulation 3, 6, 7 correspond par exemple à une pièce qui peut être en bois, en plastique ou en un métal ou alliage tel que le cuivre ou l'aluminium ou l'acier inoxydable pouvant être anodisé. Une telle pièce correspond par exemple à un rivet affleurant indémontable conçu pour une utilisation souple, précise et durable.

A la figure 1A , l'instrument 1 est représenté en position dépliée. Dans cette position, les repères 8a, 8b, 8c, 8d, 8e, 8f, 8g, 8h sont éloignés les uns des autres en comparaison de leur éloignement dans la position repliée, illustrée en figures 3 et 4, où ces derniers sont proches voire sensiblement accolés les uns aux autres.

A la figure 2 l'écart entre chaque repère 8a, 8b, 8c, 8d, 8e, 8f, 8g, 8h est particulier. Dans cette position dépliée, toutes les branches 4a à 4h et sous branches 5a, 5b reliées entre elles et qui sont donc mobiles les unes par rapport aux autres, forment entre elles un angle $\alpha$ d'ouverture d'environ 90°.

Lorsque l'instrument 1 est dans une position repliée qui est maximale les repères 8a, 8b, 8c, 8d, 8e, 8f, 8g, 8h sont proches voire accolés les uns aux autres, comme il est illustré aux figures 3 et 4.

Dans cette position repliée maximale, l'instrument 1 de mesure à un encombrement très réduit en ayant par exemple comme dimensions :

- longueur de l'ordre de 195 à 205 mn ;
- largeur de l'ordre de 55 à 65 mm, et
- épaisseur de l'ordre de 1,5 à 2,3 mm.

L'instrument 1 de mesure peut ainsi être facilement transporté.

Dans la position dépliée maximale, l'écart entre les repères 8a et 8d des branches 4a et 4h est d'environ 750 à 850 mm.

Dans cet instrument 1, les branches 4a à 4h forment quatre paires 2a, 2b, 2c, 2d de branches qui sont reliées entre elles, à l'une de leur extrémité par un élément d'articulation 3.

Les paires formées par ces branches 4a à 4h sont les suivantes :

- 4a et 4b forment la paire 2a ;
- 4c et 4d forment la paire 2b ;
- 4e et 4f forment la paire 2c, et
- 4g et 4h forment la paire 2d.

Une branche 4a à 4h de chaque paire 2a, 2b, 2c, 2d de branches est reliée à deux branches 4a à 4h de paires différentes par des éléments d'articulation 6.

Par exemple à la figure 2 :

- la branche 4b de la paire 2a est reliée par des éléments d'articulation 6 aux branches 4c et 4e des paires 2b et 2c ;
- la branche 4d de la paire 2b est reliée par des éléments d'articulation 6 aux branches 4e et 4g des paires 2c et 2d ;
- la branche 4e de la paire 2c est reliée par des éléments d'articulation 6 aux branches 4d et 4b des paires 2b et 2a, et
- la branche 4g de la paire 2d est reliée par des éléments d'articulation 6 aux branches 4f et 4d des paires 2c et 2b.

On remarquera d'ailleurs, que les branches 4b et 4g de chacune des paires 2a et 2d comportent en leur extrémité libre un élément d'articulation 6, et non un repère 8a, 8b, 8c, 8d, 8e, 8f, 8g, 8h comme c'est le cas pour les autres branches 4a, 4c, 4d, 4e, 4f, 4h.

Dans cet instrument 1 les sous branches 5a et 5b sont reliées chacune par des éléments d'articulation 7 à deux branches 4a, 4c, 4f, 4h de paires différentes comportant moins de trois éléments d'articulation 3, 6. Par exemple, aux figures 1A et 2 les éléments d'articulations 7 relient :

- la sous branche 5a aux branches 4a de la paire 2a et 4c de la paire 2b, et
- la sous branche 5b aux branches 4h de la paire 2d et 4f de la paire 2c.

En ne prenant pas en compte l'élément d'articulation 7, ces branches 4a et 4h appartenant aux paires 2a et 2d comprennent un élément d'articulation 3 et les branches 4c et 4f des paires 2b et 2c comportent deux éléments d'articulation 3 et 6.

Ces sous branches 5a, 5b ont comme les branches 4a, 4c, 4d, 4e, 4f et 4h une extrémité libre qui forme un repère 8g, 8f visant à définir une mesure.

Les repères 8a, 8b, 8c, 8d, 8e, 8f, 8g, 8h formés à la fois par l'extrémité libre des branches 4a, 4c, 4d, 4e, 4f et des sous branches 5a, 5b sont toujours comprises sensiblement sur une même ligne, que l'instrument 1 soit en position dépliée ou repliée. Dans le présent mode de réalisation illustré aux figures 1A à 4, l'instrument 1 en comporte huit. Plus précisément il comprend :

- deux repères extérieurs 8a et 8d que sont le premier repère 8a et le quatrième repère 8d ;
- deux repères intérieurs 8b et 8c que sont le deuxième repère 8b et le troisième repère 8c, et
- quatre repères intermédiaires 8e, 8f, 8g et 8h dont font partie le cinquième repère 8g et le sixième repère 8h.

Ainsi que l'illustre par exemple les figures 1A et 1B, chacun de ces repères 8a, 8b, 8c, 8d, 8e, 8f, 8g, 8h comprend à son extrémité une encoche 11 et un logement 9 qui est susceptible de recevoir un élément apte à réaliser un pointage et/ou un marquage de mesure. Ce logement 9 à un diamètre qui est compris entre environ 1 mm et 3mm. Ces logements 9 permettent notamment de mesurer la distance exacte d'un écart entre deux repères 8a, 8b, 8c, 8d, 8e, 8f, 8g, 8h.

L'élément qui est apte à réaliser un pointage ou un marquage de mesure peut par exemple se rapporter à une pointe de crayon ou une pointe fine - compas, aiguille, punaise -.

Ainsi, il est alors possible de tracer des lignes d'Or primaires, secondaires et tertiaires à la surface d'un support, tel qu'un tableau à peindre, et déterminer les lignes de force et les points d'intérêts de ce tableau.

La repère 8b, formé par l'extrémité libre de la branche 4e de la paire 2c qui est relié aux branches 4d, 4b des paires 2b et 2a, comporte un indicateur visuel pouvant correspondre par exemple à une couleur ou une forme particulière de ce repère 8b.

Cet indicateur visuel permet de déterminer directement et sans calcul une mesure visuelle, relative à la suite de Fibonacci par l'utilisation de la valeur de $\Phi$ utilisée dans cette suite, pour un segment mesuré entre les repères 8a et 8d des branches 4a et 4h ou entre les repères 8a et 8c des branches 4a et 4e ou les repères 8d et 8b des branches 4h et 4e.

En effet à la figure 2, des exemples sont données :

- en positionnant les repères 8a et 8d aux extrémités d'un segment AC, il est alors possible de mesurer la longueur d'un segment BC à partir du repère 8b comportant un indicateur visuel et du repère 8d sans qu'il soit nécessaire d'effectuer le calcul suivant : AC / $\Phi$ = BC ;
- en positionnant le repère 8b comprenant un indicateur visuel et le repère extérieur 8d au niveau des extrémités du segment BC, Il est alors possible de mesurer ou de pointer la longueur :

    ■ d'un segment AB à partir des repères 8a et 8b sans qu'il soit nécessaire d'effectuer le calcul suivant : BC / $\Phi$ = AB ;
    ■ d'un segment BB1 à partir du repère 8b comportant un indicateur visuel et du repère 8c sans qu'il soit nécessaire d'effectuer le calcul suivant : BC / $\Phi$ = BB1 ;
    ■ d'un segment AC à partir des repères 8a et 8d sans qu'il soit nécessaire d'effectuer le calcul suivant : BC x $\Phi$ = AC, et

- en positionnant le repère 8a et le repère comprenant l'indicateur visuel 8b aux extrémités du segment ab, il est alors possible de mesurer la longueur du segment BC à partir du repère 8b comportant un indicateur visuel et du repère 8d sans qu'il soit nécessaire d'effectuer le calcul suivant : AB X $\Phi$ = BC.

On notera que l'instrument 1 de mesure permet de déterminer ce rapport constant entre deux segments quel que soit l'angle $\alpha$ d'ouverture, grâce à sa proportionnalité.

Ainsi que nous l'avons vu précédemment et que l'illustre d'ailleurs la figure 2 l'instrument 1 peut avoir une position dépliée particulière où toutes les branches 4a à 4h et sous branches 5a, 5b, qui sont reliées entre elles, forment un angle $\alpha$ d'ouverture d'environ 90°.

Dans cette position particulière, l'instrument 1 permet alors d'obtenir rapidement les mesures relatives à la suite de Fibonacci que sont la paume, la palme, l'empan, le pied et la coudée.

Comme nous l'avons vu précédemment, pour une mesure de la paume égale à environ 7,4 cm, indiquée à la figure 2 par la distance d5, la mesure de :

- la palme est obtenue par la multiplication de la mesure de la paume par $\Phi$, qui est alors égale à 12,36 cm et qui est indiquée à la figure 2 par la distance d4 ;
- l'empan est obtenue par la multiplication de la mesure de la palme par $\Phi$, qui est alors égale à 20 cm et qui est indiquée à la figure 2 par la distance d3 ;
- le pied est obtenue par la multiplication de la mesure de l'empan par $\Phi$, qui est alors égale à 32,36 cm et qui est indiquée à la figure 2 par la distance d2, et
- la coudée est obtenue par la multiplication de la mesure du pied par $\Phi$, qui est alors égale à 52,36 cm et qui est indiquée à la figure 2 par la distance d1.

On comprend alors qu'à partir du moment où l'on connait une des mesures relatives à la paume, la palme, l'empan, le pied ou à la coudée, les autres mesures peuvent alors être déterminées en multipliant/divisant cette mesure connue par $\Phi$. Grâce à l'instrument 1 de mesure, il n'est pas nécessaire de calculer ces valeurs. Il convient juste de le positionner convenablement sur le support.

L'instrument 1 de mesure peut comporter un élément de verrouillage 11. Cet élément de verrouillage 11 vient par exemple remplacer l'élément d'articulation 6 qui relie deux ensembles de deux paires telles que les paires 2a et 2b avec les paires 2c et 2d. Un tel élément de verrouillage 11 est illustré, par exemple, pour l'instrument 1 représenté aux figures 1 A et 3.

Cet élément de verrouillage 11, en plus de réaliser les mêmes fonctions qu'un élément d'articulation 3, 6, 7, peut en complément maintenir l'instrument 1 dans une position donnée comprise entre une position dépliée et repliée maximale. Un tel maintien, de l'instrument en une position donnée, est obtenu par l'actionnement de cet élément verrouillage 11, par exemple par vissage. Il peut correspondre à titre d'exemple à un bouton moleté ou encore à un bouton fileté ou taraudé coopérant avec un élément complémentaire fileté ou taraudé

Par exemple à la figure 1A, les ensembles de deux paires 2a, 2b et 2c, 2d sont reliés par cet élément de verrouillage 11 au niveau de la branche 4d de l'ensemble de deux paires 2a, 2b et de la branche 4e de l'ensemble de deux paires 2c, 2d. A la figure 2, c'est l'élément d'articulation 6 qui réalise une telle liaison des branches 4d et 4e.

Cet élément de verrouillage 11, ou l'élément d'articulation 6, est localisé sensiblement au milieu de ces deux branches 4d, 4e.

Cet élément de verrouillage 11, ou l'élément d'articulation 6, peut être compris sur un axe de symétrie 12 qui sépare l'instrument 1 de mesure en deux parties sensiblement égales.

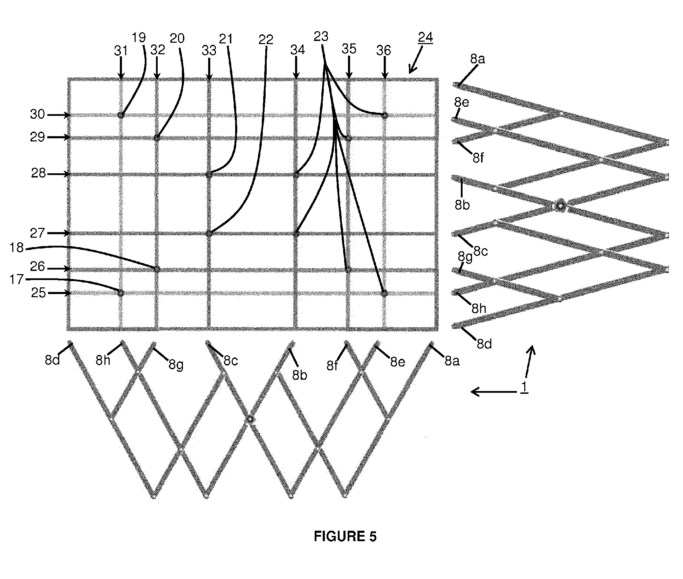

Dans le cadre de l'utilisation de cet instrument 1 de mesure et/ou de tracé et/ou de visée, il est possible d'indiquer très rapidement sur un support des marques permettant de déterminer un tracé régulateur 24 simple ou complexe basé sur le Nombre d'Or comme illustré à la figure 5.

Dans un exemple d'utilisation de l'instrument 1, les étapes suivantes peuvent être réalisées :

- positionner et déplier l'instrument 1 horizontalement de façon à ce que les repères 8a, 8b, 8c, 8d, 8e, 8f, 8g, 8h se trouvent aux extrémités du support, par exemple un tableau à peindre ;
- maintenir l'instrument 1 dans la position donnée, en vissant l'élément de verrouillage 11 de sorte à bloquer l'instrument 1 de mesure dans la position ou l'angle α d'ouverture voulu ;
- marquer par l'élément apte à réaliser un marquage de mesure la position des lignes d'Or primaires correspondant aux repères 8b, 8c, puis si besoin les lignes d'Or secondaires correspondant aux repères 8g, 8f, et les lignes d'Or tertiaires correspondant aux repères 8h et 8e, et
- réaliser ensuite les étapes précédentes en positionnant maintenant l'instrument 1 de mesure verticalement afin d'obtenir ainsi le tracé régulateur 24 des lignes d'Or.

On notera que lorsque l'instrument 1 est en position verticale les repères suivants permettent de tracer les lignes mentionnées ci-après :

- repère 8b : une ligne horizontale primaire supérieure 28 ;
- repère 8c : une ligne horizontale primaire inférieure 27 ;
- repère 8f : une ligne horizontale secondaire supérieure 29 ;
- repère 8g : une ligne horizontale secondaire inférieure 26 ;
- repère 8e : une ligne horizontale tertiaire supérieure 30, et
- repère 8h : une ligne horizontale tertiaire inférieure 25.

Lorsqu'il est en position horizontale :

- repère 8b : une ligne verticale primaire droite 34 ;

- repère 8c : une ligne verticale primaire gauche 33 ;
- repère 8f : une ligne verticale secondaire droite 35
- repère 8g : une ligne verticale secondaire gauche 32 ;
- repère 8e : une ligne verticale tertiaire droite 36, et
- repère 8h : une ligne verticale tertiaire gauche 31.

Ce tracé régulateur 24, illustré à la figure 5, peut comporter :

- un point tertiaire supérieur gauche 19 correspondant à l'intersection de la ligne horizontale tertiaire supérieure 30 avec la ligne verticale tertiaire gauche 31 ;
- un point tertiaire inférieur gauche 17 correspondant à l'intersection de la ligne horizontale tertiaire inférieure 25 avec la ligne verticale tertiaire gauche 31 ;
- un point secondaire supérieur gauche 20 correspondant à l'intersection de la ligne horizontale secondaire supérieure 29 avec la ligne verticale secondaire gauche 32 ;
- un point secondaire inférieur gauche 18 correspondant à l'intersection de la ligne horizontale secondaire inférieure 26 avec la ligne verticale secondaire gauche 32 ;
- un point primaire supérieur gauche 21 correspondant à l'intersection de la ligne horizontale primaire supérieure 28 avec la ligne verticale primaire gauche 33, et
- point primaire inférieur gauche 22 correspondant à l'intersection de la ligne horizontale primaire inférieure 27 avec la ligne verticale primaire gauche 33.

Selon le même principe on obtient également les points 23 primaires, secondaires et tertiaires à droite avec notamment les lignes verticale primaire droite 34, verticale secondaire droite 35, verticale tertiaire droite 36. Les notions de ligne ou de point gauche, droite, inférieur et supérieur sont relatives aux médianes verticales et horizontales du tableau illustré à la figure 5.

Cet instrument 1 de mesure peut également être utilisé :

- pour permettre de tracer des cercles d'un diamètre bien supérieur à celui d'un compas de précision ;
- comme un viseur et permettre ainsi de cadrer un paysage et de reporter des côtes sur un support pour une représentation picturale, mais aussi d'analyser un paysage, une construction géométrique, une sculpture, un plan, un jardin paysage ou une oeuvre d'art, et
- pour déterminer les proportions nécessaires pour dessiner et/ou peindre des visages ou des corps humains dans des proportions réalistes.

Un tel instrument 1 est fabriqué selon le procédé comprenant les étapes suivantes :

- découpe, par exemple au laser, dans une plaque en bois, en aluminium, en acier ou en plastique de branches 4a, 4b, 4c, 4d, 4e, 4f, 4g, 4h et de sous branches 5a, 5b ;

- assemblage de branches 4a, 4b, 4c, 4d, 4e, 4f, 4g, 4h à partir d'éléments d'articulation 3, 6, et
- réalisation au niveau d'une extrémité libre des branches 4a, 4c, 4d, 4e, 4f, 4h d'un repère 8a, 8b, 8c, 8d, 8e, 8f, 8g, 8h visant à définir une mesure.

L'étape d'assemblage comporte les sous étapes suivantes :

- formation de paires de branches 2a, 2b, 2c, 2d reliées entre elles à l'une de leur extrémité par un élément d'articulation 3, et
- liaison d'une branche 4b, 4d, 4e, 4g de chaque paire 2a, 2b, 2c, 2d de branches à deux branches de paires différentes par des éléments d'articulation 6.

Le procédé comprend également une étape d'agencement des sous branches 5a, 5b dans l'instrument 1 de mesure en reliant chacune de ces sous branches 5a, 5b par des éléments d'articulation 7 à des branches 4a, 4c, 4f, 4h de paires 2a, 2b, 2c, 2d différentes comportant moins de trois éléments d'articulation 3, 6.

**Revendications**

1. Instrument (1) de mesure et/ou de tracé et/ou de visée :

   comprenant sur une même ligne un premier repère (8a), un deuxième repère (8b), un troisième repère (8c), un quatrième repère (8d) et un cinquième repère (8g) reliés entre eux par un élément de liaison (10) autorisant un déplacement relatif des repères selon la formule suivante :

$$\frac{d1}{d2} = \frac{d3}{d4} = \Phi$$

   avec:

   - d1 la distance entre les premier et quatrième repères ;
   - d2 la distance entre les deuxième et quatrième repères ;
   - d3 la distance entre les troisième et quatrième repères ;
   - d4 la distance entre les cinquième et quatrième repères ;
   - Φ un nombre constant, notamment Φ est égal ou sensiblement égal à 1.5, ou 1.6 ou 1.62 ou 1.618 ou (1 +√5)/2,

et/ou

   comprenant sur une même ligne un premier repère (8a), un deuxième repère (8b), un troisième repère (8c), un quatrième repère (8d), un cinquième repère (8g) et un sixième repère (8h) reliés entre eux par un élément de liaison (10) autorisant un déplacement relatif des repères selon la formule suivante :

$$\frac{d1}{d2} = \frac{d3}{d4} = \frac{d4}{d5} = \Phi$$

   avec :

   - d1 la distance entre les premier et quatrième repères ;
   - d2 la distance entre les deuxième et quatrième repères ;
   - d3 la distance entre les troisième et quatrième repères ;
   - d4 la distance entre les cinquième et quatrième repères ;
   - d5 la distance entre les sixième et quatrième repères ; et
   - Φ un nombre constant, notamment Φ est égal ou sensiblement égal à 1.5, ou 1.6 ou 1.62 ou 1.618 ou (1 +√5)/2.

2. Instrument (1) selon la revendication précédente, **caractérisé en ce que** l'élément de liaison (10) comprend des parallélogrammes (T1, T2, T3, T4) déformables, en particulier quatre parallélogrammes (T1, T2, T3, T4) déformables, notamment des parallélogrammes dont le rapport de longueurs de deux côtés contigus est égal à $\frac{a}{b} = \Phi$ .

3. Instrument (1) selon l'une quelconque des revendications précédentes, **caractérisé en ce que** l'élément de liaison (10) comprend des branches (4a, 4b, 4c, 4d, 4e, 4f, 4g, 4h) formant en leur extrémité libre le repère (8a, 8b, 8c, 8d, 8e, 8f, 8g, 8h) visant à définir une mesure, lesdites branches (4a, 4b, 4c, 4d, 4e, 4f, 4g, 4h) étant reliées entre elles par des éléments d'articulation (6, 3) de sorte à pourvoir évoluer entre une position dépliée dans laquelle les repères (8a, 8b, 8c, 8d, 8e, 8f, 8g, 8h) sont éloignés les uns des autres et une position repliée dans laquelle ces repères (8a, 8b, 8c, 8d, 8e, 8f, 8g, 8h) sont sensiblement accolés les uns aux autres.

4. Instrument (1) selon la revendication précédente, **caractérisé en ce que** l'élément de liaison (10) comporte des sous branches (5a, 5b) d'une longueur inférieure à celle des branches (4a, 4b, 4c, 4d, 4e, 4f, 4g, 4h).

5. Instrument (1) selon la revendication précédente, **caractérisé en ce que** les branches (4a, 4b, 4c, 4d, 4e, 4f, 4g, 4h) forment quatre paires de branches (2a, 2b, 2c, 2d) qui sont reliées entre elles à une de leurs extrémités par un élément d'articulation (3).

6. Instrument (1) selon la revendication précédente, **caractérisé en ce qu'**une branche (4b, 4d, 4e, 4g) de chaque paire (2a, 2b, 2c, 2d) de branches est reliée à deux branches (4b, 4c, 4d, 4e, 4f, 4g) de paires (2a, 2b, 2c, 2d) différentes par des éléments d'articulation (6).

7. Instrument (1) selon l'une quelconque des revendications 5 et 6, **caractérisé en ce que** les sous branches (5a, 5b) sont reliées chacune par des éléments d'articulation (7) à deux branches (4a, 4c, 4f, 4h) de paires différentes comportant moins de trois éléments d'articulation (6, 3).

8. Instrument (1) selon l'une des revendications 4 à 7, **caractérisé en ce que** l'extrémité libre des sous branches (5a, 5b) forme un repère (8f, 8g) visant à définir une mesure.

9. Instrument (1) selon l'une quelconque des revendications précédentes, **caractérisé en ce que** chaque repère (8a, 8b, 8c, 8d, 8e, 8f, 8g, 8h) comporte un logement (9) susceptible de recevoir un élément apte à réaliser un pointage et/ou un marquage de mesure.

10. Instrument (1) selon l'une quelconque des revendications précédentes, **caractérisé en ce que** l'élément de liaison (10) comporte un élément de verrouillage (11) dudit instrument (1) dans une position donnée.

11. Instrument (1) selon l'une quelconque des revendications 4 à 10, **caractérisé en ce que** les extrémités d'une branche (4a, 4b, 4c, 4d, 4e, 4f, 4g, 4h) ou d'une sous branche (5a, 5b) comprennent des éléments d'articulation (7, 6, 3).

12. Instrument (1) selon l'une quelconque des revendications 4 à 11, **caractérisé en ce que** les sous branches (5a, 5b) sont droites et de même longueur.

13. Instrument (1) selon l'une quelconque des revendications 3 à 12, **caractérisé en ce que** les branches (4a, 4b, 4c, 4d, 4e, 4f, 4g, 4h) sont droites.

14. Utilisation d'un instrument (1) de mesure selon l'une quelconque des revendications précédentes, **caractérisée en ce qu'**elle comprend les étapes suivantes :

- positionnement et dépliage dudit instrument (1) dans une position donnée visant à réaliser un déplacement relatif de repères sur une même ligne selon la formule suivante :

$$\cdot\ \frac{d1}{d2} = \frac{d3}{d4} = \ \Phi$$

, lorsque l'instrument comprend un premier repère (8a), un deuxième repère (8b), un troisième repère (8c), un quatrième repère (8d) et un cinquième repère (8g) reliés entre eux par un élément de liaison (10), avec :

- d1 la distance entre les premier et quatrième repères ;
- d2 la distance entre les deuxième et quatrième repères ;
- d3 la distance entre les troisième et quatrième repères ;
- d4 la distance entre les cinquième et quatrième repères ;
- Φ un nombre constant, notamment Φ est égal ou sensiblement égal à 1.5, ou 1.6 ou 1.62 ou 1.618 ou $(1+\sqrt{5})/2$, et/ou

$$\cdot\ \frac{d1}{d2} = \frac{d3}{d4} = \frac{d4}{d5} = \ \Phi,$$

lorsque l'instrument comprend un premier repère (8a), un deuxième repère (8b), un troisième repère (8c), un quatrième repère (8d), un cinquième repère (8g) et un sixième repère (8h) reliés entre eux par un élément de liaison (10), avec :

- d1 la distance entre les premier et quatrième repères ;
- d2 la distance entre les deuxième et quatrième repères ;
- d3 la distance entre les troisième et quatrième repères ;
- d4 la distance entre les cinquième et quatrième repères ;
- d5 la distance entre les sixième et quatrième repères ; et
- Φ un nombre constant, notamment Φ est égal ou sensiblement égal à 1.5, ou 1.6 ou 1.62 ou 1.618 ou $(1+\sqrt{5})/2$,

- maintien dudit instrument (1) dans la position donnée, et
- marquage de la mesure réalisée.

FIGURE 1A

FIGURE 1B

FIGURE 2

**FIGURE 3**

**FIGURE 4**

FIGURE 5

Europäisches
Patentamt

European
Patent Office

Office européen
des brevets

**RAPPORT DE RECHERCHE EUROPEENNE**

Numéro de la demande

EP 14 17 1575

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | Anonymous: "Golden Mean Art", , 19 août 2012 (2012-08-19), XP055103643, Extrait de l'Internet: URL:http://web.archive.org/web/20120819074153/http://www.goldenmeanart.com/ [extrait le 2014-02-21] * Image de la "four way mean gauge" * ----- | 1-14 | INV. B43L9/08 B43L13/00 G01B3/16 G01C15/00 B43L13/10 G01B5/20 |
| A | CN 201 172 337 Y (YANZE WANG [CN]) 31 décembre 2008 (2008-12-31) * figures 14,16 * ----- | 1-14 | |
| A | DE 18 00 343 B1 (MAHO FEINMECHANIK UND PRAEZ SM) 30 juillet 1970 (1970-07-30) * figure 1 * ----- | 1-14 | |
| A | JP S60 171391 U (PATENTEE UNKNOWN) 13 novembre 1985 (1985-11-13) * figure 4 * ----- | 1-14 | |
| A | SU 1 719 249 A1 (MAMYRIN ANATOLIJ V [SU]) 15 mars 1992 (1992-03-15) * figure 1 * ----- | 1-14 | DOMAINES TECHNIQUES RECHERCHES (IPC) B43L G01B G01C G09B G06F F16D |

Le présent rapport a été établi pour toutes les revendications

| Lieu de la recherche | Date d'achèvement de la recherche | Examinateur |
|---|---|---|
| La Haye | 21 octobre 2014 | Gagin, Thibaut |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
 
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 14 17 1575

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-10-2014

| Document brevet cité au rapport de recherche | | Date de publication | Membre(s) de la famille de brevet(s) | | Date de publication |
|---|---|---|---|---|---|
| CN 201172337 | Y | 31-12-2008 | AUCUN | | |
| DE 1800343 | B1 | 30-07-1970 | AUCUN | | |
| JP S60171391 | U | 13-11-1985 | JP | H0325991 Y2 | 05-06-1991 |
| | | | JP | S60171391 U | 13-11-1985 |
| SU 1719249 | A1 | 15-03-1992 | AUCUN | | |

EPO FORM P0460

Pour tout renseignement concernant cette annexe : voir Journal Officiel de l'Office européen des brevets, No.12/82